# EUROPEAN PATENT SPECIFICATION

(11) **EP 1 294 563 B1**
(45) Date of publication and mention of the grant of the patent: **30.03.2005**
(21) Application number: 01935677.3
(22) Date of filing: 17.05.2001
(51) Int. Cl.: B32B 27/32, A44B 18/00

(54) **LAMINATE AND ITS USE**
MEHRSCHICHTWERKSTOFF UND SEINE VERWENDUNG
LAMELLE ET UTILISATION DE CELUI-CI

(30) Priority: 14.06.2000 EP 00112621
(43) Date of publication of application: 26.03.2003
(73) Proprietor: 3M Innovative Properties Company, St. Paul, MN 55133-3427 (US)
(72) Inventor: FRANKE, Carsten, 41464 Neuss (DE); HERTLEIN, Thomas, 41352 Korschenbroich (DE)
(74) Representative: Hermann, Gerhard, Dr.
(86) International application number: PCT/US2001/016109
(87) International publication number: WO 2001/096113

(56) References cited:
- WO-A-00/29197
- WO-A-92/01401

## Description

### Field of the Invention

The present invention refers to a laminate comprising a first polymer layer and a second polymer layer wherein the first polymer layer comprises at least one polyolefin and .the second polymer layer is extruded upon or heat-bonded to the first polymer layer, to the manufacture of such laminates and to their use in the disposable soft goods industry.

### Background of the Invention

Laminates comprising a first polymer layer and a second polymer layer wherein the first polymer layer comprises at least one polyolefin and the second polymer layer is extruded upon the first polymer layer, are widely used in industry and, in particular, in the disposable soft goods industry.

WO 92/01,401 discloses, for example, a sheet of loop material comprising a backing bearing on one of its surfaces longitudinally oriented fibers exhibiting an arcuate-type structure. In a more specific embodiment of such sheet of loop material shown in Fig.4 of WO '401, the backing comprises a thermoplastic backing layer bearing the loops, and a further polymeric backing layer attached to the surface of the first thermoplastic backing layer which is opposite to the loops The further polymeric backing layer preferably comprises a polyolefin and is preferably printed on either of its major surfaces so that the printing can be seen through the sheet of fibers.

Such further polyolefin comprising polymeric backing layer is usually printed prior to the application of the thermoplastic backing layer. This requires that the thermoplastic backing layer can be laminated to the further polyolefin comprising backing layer and that the sheet of loop material can be laminated to other surfaces such as polyolefin layers which may be found, for example, in disposable soft goods articles such as diapers, without any substantial thermal deformation of the further polyolefin comprising polymeric backing layer.

The requirements with respect to the thermal dimensional stability of printable polyolefin comprising polymeric layers or films of laminates are particularly high in the disposable soft goods industry where rolls of such films with a length of typically several thousands of meters are printed first followed by the extrusion of a second polymeric layer to one of the major surfaces of the printed polyolefin comprising polymeric layer to provide a roll of laminate. Such roll of laminate is then usually slit to provide smaller rolls of laminate with a width appropriate for use in the manufacture of disposable soft goods articles such as diapers. It is essential that the thermal deformation and, more particularly, the variation of the thermal deformation of the laminate width (i.e., in cross-web direction) as measured along the length of the roll (i.e. in machine direction) is sufficiently low so that such smaller rolls of laminate with a sufficiently precise orientation of the printing can be obtained by slitting with a low amount of waste.

It was found by the present inventors that the laminates presently available comprising a first polymer layer and a second polymer layer wherein the first polymer layer comprising at least one polyolefin and the second polymer layer being extruded upon or heat-bonded to the first polymer layer, often exhibit a substantial thermal deformation and, in particular, a substantial variation of the thermal deformation of the laminate width which renders such laminates less suitable for printing applications and, in particular, for high precision printing applications.

It was therefore an object of the present invention to provide a novel laminate comprising a first polymer layer and a second polymer layer wherein the first polymer layer comprises at least one polyolefin and the second polymer layer is extruded upon or heat-bonded to the first polymer layer, which is substantially free of thermal deformation and, in particular, has a small variation of the thermal deformation of the laminate width. It was another object of the present invention to provide a novel laminate of such type which is suitable for printing applications, in particular, in the disposable soft goods industry. Other objects of the present invention can be taken from the following detailed description of the invention.

### Brief Description of the Figures

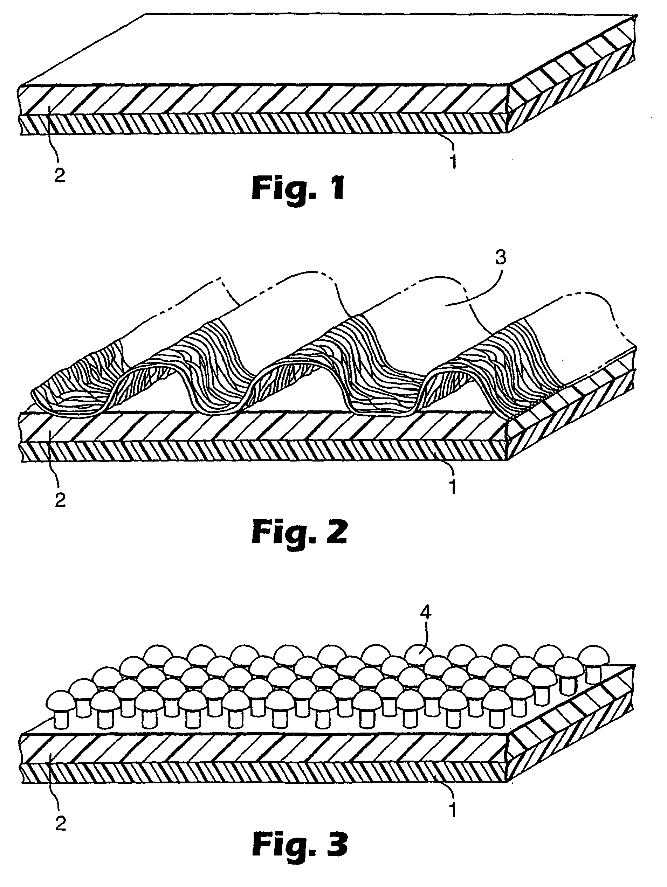

Fig. 1 is a schematic view of a laminate according to the present invention comprising first polymer layer 1 and second polymer layer 2 wherein first polymer layer 1 comprises at least one polyolefin and is simultaneously biaxially stretched and the second polymer layer 2 is extruded upon or heat-bonded to first polymer layer 1
Fig. 2 is a schematic view of a laminate according to the present invention comprising first polymer layer 1 and second polymer layer 2 wherein first polymer layer 1 comprises at least one polyolefin and is simultaneously biaxially stretched and the second polymer layer 2 is extruded upon or heat-bonded to the first polymer layer 1, the exposed surface of the second polymer layer bearing loop-type female fastening elements 3 of a mechanical fastening system in an arcuate-type structure.
Fig. 3 is a schematic view of a laminate according to the present invention comprising first polymer layer 1 and second polymer layer 2 wherein first polymer layer 1 comprises at least one polyolefin and is simultaneously biaxially stretched and the second polymer layer 2 is extruded upon or heat-bonded to the first polymer layer 1, the exposed surface of the second polymer layer bearing mushroom-type male fastening elements of a mechanical fastening system.

### Brief Description of the Invention

The present invention refers to a laminate with the features of claim 1 comprising a first polymer layer and a second polymer layer wherein the first polymer layer comprises at least one polyolefin and is simultaneously biaxially stretched and the second polymer layer is extruded upon or heat-bonded to the first polymer layer, said laminate exhibiting a variation of the laminate shrinkage in cross direction over a length of at least 100 m in machine direction of less than about 0.6%.

The present invention furthermore refers to the manufacture of such laminate and to its use in the disposable soft goods industry.

### Detailed Description of the Invention

Certain terms are used in the description and the claims that, while for the most part are well known, may require some explanation. "Simultaneonsly biaxially stretched," when used herein to describe a film, indicates that the film has been stretched in two different directions, a first direction and a second direction, in the plane of the film whereby significant portions of the stretching in each of the two directions are performed simultaneously. Typically, but not always, the two directions are substantially perpendicular and are in the machine direction ("MD") of the film and the cross direction ("CD") of the film. Unless context requires otherwise, the terms "orient," "draw," and "stretch" are used interchangeably throughout, as are the terms "oriented," "drawn," and "stretched," and the terms "orienting," "drawing," and "stretching.

The term "stretch ratio," as used herein to describe a method of stretching or a stretched film, indicates the ratio of a linear dimension of a given portion of a stretched film to the linear dimension of the same portion prior to stretching. For example, in a stretched film having an MD stretch ratio of 5:1, a given portion of unstretched film having a 1 cm linear measurement in the machine direction would have 5 cm measurement in the machine direction after stretch. In a stretched film having a CD stretch ratio of 5:1, a given portion of unstretched film having a 1 cm linear measurement in the cross direction would have 5 cm measurement in the cross direction after stretch.

The term "stretch parameter" is used to indicate the value of the stretch ratio minus 1. For example "first direction stretch parameter and "second direction stretch parameter " are used herein to indicate the value of first direction stretch ratio minus 1, and second direction stretch ratio minus 1, respectively. Likewise, the terms "MD stretch parameter " and "CD stretch parameter " are used herein to indicate the value of MD stretch ratio minus 1, and CD stretch ratio minus 1, respectively. For example, a film that has not been stretched in the machine direction would have an MD stretch ratio of 1 (i.e., dimension after stretch is equal to dimension before stretch). Such a film would have an MD stretch parameter of 1 minus 1, or zero (i.e., the film has not been stretched). Likewise, a film having an MD stretch ratio of 7 would have an MD stretch parameter of 6.

The term "peak first or second direction stretch parameter" is used to denote the maximum value of the stretch parameter in the first or second direction, respectively, occurring when stretching the first polymer layer. The first polymer layer is subsequently partially relaxed to the "final first or second direction stretch parameter". The terms "peak first or second direction stretch ratio" and "final first or second direction stretch ratio" are used correspondingly.

The "mechanical stretch ratio", also known as "nominal stretch ratio", is determined by the unstretched and stretched dimensions of the overall film, and can typically be measured at the film grippers at the edges of the film used to stretch the film in the particular apparatus being used. The term "global stretch ratio" refers to the overall stretch ratio of the first polymer layer after the portions that lie near the grippers, and thus are affected during stretching by the presence of the grippers, have been removed from consideration. The global stretch ratio can be equivalent to the mechanical stretch ratio when the input unstretched first polymer layer has a constant thickness across its full width and when the effects of proximity to the grippers upon stretching are small. More typically, however, the thickness of the input unstretched first polymer layer is adjusted so as to be thicker or thinner near the grippers than at the center of the film. When this is the case, the global stretch ratio will differ from the mechanical or nominal stretch ratio. These global or mechanical ratios are both to be distinguished from a local stretch ratio. The local stretch ratio is determined by measuring a particular portion of the first polymer layer (for example a 1 cm portion) before and after stretch. When stretch is not uniform over substantially the entire edge-trimmed film, then the local ratio can be different from the global ratio. When stretch is substantially uniform over substantially the entire first polymer layer (excluding the area immediately near the edges and surrounding the grippers along the edges), then the local ratio will be substantially equal to the global ratio. Unless the context requires otherwise, the terms first direction stretch ratio and second direction stretch ratio are used herein to describe the global stretch ratio.

The first polymer layer can be simultaneously biaxially stretched by applying a "proportional stretch profile" in which the ratio of the first direction stretch parameter to the second direction stretch parameter is kept substantially constant throughout the stretch process. A particular example of this would be the case where the ratio of the MD stretch parameter to the CD stretch parameter is kept substantially constant throughout the stretch process. The term "MD overbias" refers to a stretch profile in which the MD stretch ratio during a significant portion of the stretching process is greater than it would be for the proportional stretch profile having the same final MD and CD stretch ratios.

When many films are simultaneously biaxially stretched at a temperature below the melting point of the polymer, particularly at a temperature below the line drawing temperature of the film, the film stretches non-uniformly, and a clear boundary is formed between stretched and unstretched parts. This phenomenon is referred to as necking or line drawing. Substantially the entire film is stretched uniformly when the film is stretched to a sufficiently high degree. The stretch ratio at which this occurs is referred to as the "natural stretch ratio" or "natural draw ratio." The necking phenomenon and the effect of natural stretch ratio is discussed, for example, in U.S. Patent Nos. 3,903,234; 3,995,007; and 4,335,069 mostly for sequential biaxial orientation processes, i.e., where the first direction stretching and the second direction stretching are performed sequentially. When simultaneous equal biaxial stretching (also referred to a square stretching) is performed, the necking phenomena can be less pronounced, resulting in stretched areas having different local stretch ratios, rather than strictly stretched and unstretched parts. In such a situation, and in any simultaneous biaxial stretching process, the "natural stretch ratio" for a given direction is defined as that global stretch ratio at which the relative standard deviation of the local stretch ratios measured at a plurality of locations upon the film is below about 15 %. Stretching above the natural stretch ratio is widely understood to provide significantly more uniform properties or characteristics such as thickness, tensile strength, and modulus of elasticity. For any given film and stretch conditions, the natural stretch ratio is determined by factors such as the polymer composition, morphology due to cast web quenching conditions and the like, and temperature and rate of stretching. Furthermore, for simultaneously biaxially stretched films, the natural stretch ratio in one direction will be affected by the stretch conditions, including final stretch ratio, in the other direction. Thus, there may be said to be a natural stretch ratio in one direction given a fixed stretch ratio in the other, or, alternatively, there may be said to be a pair of stretch ratios (one in MD and one in CD) which result in the level of local stretch uniformity by which the natural stretch ratio is defined above.

A schematic graphic representation of a laminate according to the invention comprising a first polymer layer 1 and a second polymer layer 2 extruded upon the first polymer layer 1, is shown in Fig. 1.

The first polymer layer comprises at least one polyolefin which can be a homopolymer, a copolymer of two or more olefins or a copolymer comprising at least one olefin in a mass ratio of at least 50 wt. % with respect to the mass of the polyolefin. The first polymer preferably comprises one or more polyolefins in a mass ratio of at least 50 wt. %, more preferably of at least 65 wt. % and especially preferably of at least 80 wt. % with respect to the mass of the first polymer. Preferred polyolefins include polyethylene and polypropylene. Isotactic polypropylene is most preferred.

For the purposes of the present invention, the term "polypropylene" is meant to include copolymers comprising at least about 90% propylene monomer units, by weight. "Polypropylene" is also meant to include polymer mixtures comprising at least about 75% polypropylene, by weight. Polypropylene for use in the present invention is preferably predominantly isotactic. Isotactic polypropylene has a chain isotacticity index of at least about 80%, an n-heptane soluble content of less than about 15 % by weight, and a density between about 0.86 and 0.92 grams/cm³ measured according to ASTM D1505-96 ("Density of Plastics by the Density-Gradient Technique"). Typical polypropylenes for use in the present invention have a melt flow index between about 0.1 and 15 grams/ten minutes according to ASTM D1238-95 ("Flow Rates of Thermoplastics by Extrusion Plastometer") at a temperature of 230°C and force of 21.6 N, a weight-average molecular weight between about 100,000 and 400,000, and a polydispersity index between about 2 and 15. Typical polypropylenes for use in the present invention have a melting point as determined using differential scanning calorimetry of greater than about 130°C, preferably greater than about 140°C, and most preferably greater than about 150°C. Further, the polypropylenes useful in this invention may be copolymers, terpolymers, quaterpolymers, etc., having ethylene monomer units and/or alpha-olefin monomer units having between 4-8 carbon atoms, said comonomer(s) content being less than 10 % by weight. Other suitable comonomers include, but are not limited to, 1-decene, 1-dodecene, vinylcyclohexene, styrene, allylbenzene, cyclopentene, norbomene, and 5-methylnorbomene. One suitable polypropylene resin is an isotactic polypropylene homopolymer resin having a melt flow index of 2.5 g/10 minutes, commercially available under the product designation 3376 from FINA Oil and Chemical Co., Dallas, TX. The polypropylene may be intentionally partially degraded during processing by addition of organic peroxides such as dialkyl peroxides having alkyl groups having up to six carbon atoms, 2,5-dimethyl-2,5-di(tert-butylperoxy)hexane, and ditertbutyl peroxide. A degradation factor between about 2 and 15 is suitable. Recycled or reprocessed polypropylene in the form, for example, of scrap film or edge trimmings, may also be incorporated into the polypropylene in amounts less than about 60% by weight.

Mixtures having at least about 75% isotactic polypropylene and at most about 25 % of another polymer or polymers may also be advantageously used in the process of the present invention. Suitable additional polymers in such mixtures include, but are not limited to, copolymers of propylene with other olefins such as ethylene, olefins comprising monomers having from four to eight carbon atoms, and other polypropylene resins.

Polypropylene for use in the present invention may optionally include 1-40% by weight of a resin, of synthetic or natural origin, having a molecular weight between about 300 and 8000, and having a softening point between about 60°C and 180°C. Typically, such a resin is chosen from one of four main classes: petroleum resins, styrene resins, cyclopentadiene resins, and terpene resins. Optionally, resins from any of these classes may be partially or fully hydrogenated. Petroleum resins typically have, as monomeric constituents, styrene, methylstyrene, vinyltoluene, indene, methylindene, butadiene, isoprene, piperylene, and/or pentylene. Styrene resins typically have, as monomeric constituents, styrene, methylstyrene, vinyltoluene, and/or butadiene. Cyclopentadiene resins typically have, as monomeric constituents, cyclopentadiene and optionally other monomers. Terpene resins typically have, as monomeric constituents, pinene, alpha-pinene, dipentene, limonene, myrcene, and camphene.

Polypropylene for use in the present invention may optionally include additives and other components as is known in the art. For example, the films of the present invention may contain fillers, pigments and other colorants, antiblocking agents, lubricants, plasticizers, processing aids, antistatic agents, nucleating agents, antioxidants and heat stabilizing agents, ultraviolet-light stabilizing agents, and other property modifiers. Fillers and other additives are preferably added in an effective amount selected so as not to adversely affect the properties attained by the preferred embodiments described herein. Typically such materials are added to a polymer before it is made into an oriented film (e.g., in the polymer melt before extrusion into a film). Organic fillers may include organic dyes and resins, as well as organic fibers such as nylon and polyimide fibers, and inclusions of other, optionally crosslinked, polymers such as polyethylene, polyesters, polycarbonates, polystyrenes, polyamides, halogenated polymers, polymethyl methacrylate, and cycloolefin polymers. Inorganic fillers may include pigments, fumed silica and other forms of silicon dioxide, silicates such as aluminum silicate or magnesium silicate, kaolin, talc, sodium aluminum silicate, potassium aluminum silicate, calcium carbonate, magnesium carbonate, diatomaceous earth, gypsum, aluminum sulfate, barium sulfate, calcium phosphate, aluminum oxide, titanium dioxide, magnesium oxide, iron oxides, carbon fibers, carbon black, graphite, glass beads, glass bubbles, mineral fibers, clay particles, metal particles and the like. In some applications it may be advantageous for voids to form around the filler particles during the biaxial orientation process of the present invention. Many of the organic and inorganic fillers may also be used effectively as antiblocking agents. Alternatively, or in addition, lubricants such as polydimethyl siloxane oils, metal soaps, waxes, higher aliphatic esters, and higher aliphatic acid amides (such as erucamide, oleamide, stearamide, and behenamide) may be employed.

Antistatic agents may also be employed, including aliphatic tertiary amines, glycerol monostearates, alkali metal alkanesulfonates, ethoxylated or propoxylated polydiorganosiloxanes, polyethylene glycol esters, polyethylene glycol ethers, fatty acid esters, ethanol amides, mono- and diglycerides, and ethoxylated fatty amines. Organic or inorganic nucleating agents may also be incorporated, such as dibenzylsorbitol or its derivatives, quinacridone and its derivatives, metal salts of benzoic acid such as sodium benzoate, sodium bis(4-tert-butyl-phenyl)phosphate, silica, talc, and bentonite. Antioxidants and heat stabilizers, including phenolic types (such as pentaerythrityl tebrakis [3-(3,5-di-tert-butyl-4-hydroxyphenyl)propionate] and 1,3,5-trimethyl-2,4,6-tris(3,5-di-tert-butyl-4-hydroxybenzyl)benzene), and alkali and alkaline earth metal stearates and carbonates may also be advantageously used. Other additives such as flame retardants, ultraviolet-light stabilizers, compatibilizers, antimicrobial agents (e.g., zinc oxide), electrical conductors, and thermal conductors (e.g., aluminum oxide, boron nitride, aluminum nitride, and nickel particles) may also be blended into the polymer used to form the film.

The first polymer can be cast into sheet form as is known in the art, to prepare a layer suitable for stretching to arrive at the preferred film described herein. When making polypropylene layers, a suitable method for casting a sheet is to feed the first polymer into the feed hopper of a single screw, twin screw, cascade, or other extruder system having an extruder barrel temperature adjusted to produce a stable homogeneous melt. The polypropylene melt can be extruded through a sheet die onto a rotating cooled metal casting wheel. Optionally, the casting wheel can be partially immersed in a fluid-filled cooling bath, or, also optionally, the cast sheet can be passed through a fluid-filled cooling bath after removal from the casting wheel.

The sheet obtained is then simultaneously biaxially stretched in a first and second direction which are substantially perpendicular to each other and preferably correspond to the machine direction (MD) and cross web direction (CD), respectively. Of all stretching methods, the method most preferred for commercial manufacture of a first polymer layer for the laminate according to the invention includes simultaneous biaxial stretching by a flat film tenter apparatus. Such a stretching method is referred to herein as simultaneous biaxial tenter stretching. The apparatus used for this process is distinct from conventional sequential biaxial stretch apparatus in which the film is stretched in the MD by being propelled over rollers of increasing speed. Simultaneous biaxial tenter stretching is preferred because it avoids contacting the full surface of the film with a roller during stretch. Simultaneous biaxial tenter stretching is performed on a tenter apparatus that grasps the sheet (employing such means as a plurality of clips) along the opposing edges of the sheet and propels the grasping means at varying speeds along divergent rails. Throughout this document, the words grippers and clips are meant to be inclusive of other film-edge grasping means. By increasing clip speed in the MD, stretch in the MD occurs. By using such means as diverging rails, CD stretch occurs. Such stretching can be accomplished, for example, by the methods and apparatus disclosed in U.S. Patent Nos. 4,330,499 and 4,595,738, and more preferably by the methods and tenter apparatus disclosed in U.S. Patent Nos. 4,675,582; 4,825,111; 4,853,602; 5,036,262; 5,051,225; and 5,072,493. Such a biaxial tenter apparatus is capable of sequential and simultaneous biaxial stretch processes, but the present invention only includes simultaneous biaxial stretching. The term simultaneous biaxial stretching as used above and below means that at least 10 % of the final stretch in each of the first and second direction being performed simultaneously, more preferably at least 25 %, and still more preferable at least 40%. Although simultaneously biaxially stretched films can be made by tubular blown film stretching processes, it is preferable that the first polymer layers used in the laminates of this invention, be made by the preferred flat film tenter stretching processes just described to minimize thickness variations and avoid processing difficulties typically associated with tubular blown film processes.

The final first and second direction stretch parameters preferably are independently from each other between 3:1 and 15:1, more preferably between 4:1 and 12:1 and especially preferably between 5:1 and 10:1.

Stretching of the first polymer layer is applied using an overstretch mode as indicated above and may be performed applying different stretch profiles such as, for example, proportional stretch profiles or MD or CD overbias stretch profiles.

The first polymer layer is subjected to an overstretch in at least one of the first and second directions to a peak first and/or second direction stretch ratio, respectively, followed by a retraction to the final first and/or second direction stretch ratio. It was found that overstretching in at least one of the first and second direction is required to obtain a sufficient thermal stability of the resulting laminate. In a preferred embodiment, the peak CD stretch parameter is at least 1.15, more preferably at least 1.2 and especially preferably at least 1.3 times the final CD stretch parameter. Especially preferred are first polymer layers exhibiting a peak CD stretch ratio of at least 1.1 and more preferably of at least 1.15 times the final CD stretch ratio, and a peak MD stretch ratio of at least 1.05 and more preferably of at least 1.1 times the final MD stretch ratio parameter.

Sometimes it is preferred to have a film with a high elongation to break and high toughness in a certain direction. These properties can be achieved with a low final draw ratio in that direction. A low final draw ratio is conveniently obtained by applying overbias profiles as is described in WO 00/29,197 filed on March 25, 1999. These profiles also provide films with uniform properties and thickness.

Simultaneous biaxial stretching of the first polymer layer is sensitive to many process conditions, including but not limited to the composition of the first polymer, first polymer layer casting and quenching parameters, the time-temperature history while preheating the film prior to stretching, the stretching temperature employed, and the rates of stretching. Prior to stretching to the peak first or second direction stretch parameter, the first polymer layer is usually pre-heated at a temperature of between 80-180°C, more preferably of 90-170°C for a time period of 1-500 s and more preferably 5-300 s. Stretching to the peak first and/or second direction stretch parameter is then typically performed at a temperature of between 100-200°C, more preferably at a temperature of between 110-170°C and especially preferably at a temperature of between 140 and 160°C. The first polymer layer is then retracted to the final first and/or second direction stretch parameter and maintained at a temperature of typically between 80-200°C and more preferably of 90-180°C in the retracted final state for 0.1-100 s and more preferably for 0.1-50s. After completion of the stretching, the first polymer layer can be gradually cooled down to room temperature but is preferably rapidly cooled down with a cooling rate of, for example, 50 K/s or more and then quickly removed from the stretching device. The first polymer layer is then wound up in roll form and stored. The parameters mentioned above are given by way of example only and modified temperature-time profiles may be applied as well. Further details on suitable stretching parameters can be taken from US-A-6 358 457 mentioned above which is incorporated herein by reference. With the benefits of the teachings in the present patent specification and the cross-referenced US-A-6 358 457 mentioned above one of skill in the art may adjust any or all of the parameters and thereby obtain improvements which differ in magnitude, or may thereby be able to adjust the precise levels of stretch profile overbias necessary to realize said improvements.

The first polymer layer useful in this invention, preferably has a final thickness of between about 5-100 µm and more preferably of about 10-55 µm. The first polymer layer may be thicker or thinner films with the understanding that the film should be thick enough to avoid excessive flimsiness and difficulty in handling, while not being so thick so as to be undesirably rigid or stiff and difficult to handle or use. Variability in film thickness, as measured by the standard deviation relative to the average, is preferably less than 10% down the web and across the interior width of the film excluding its edge areas. This interior width varies depending on the relative portion of the film edges to the entire width of the film. Generally, film edge is not stretched biaxially, but rather exhibits stretched characteristics that tend toward the uniaxial even though applying simultaneous biaxial stretching operation. Therefore it may be necessary to cut off and discard the edges of the first polymer layer, for example, prior to or after winding it up into the form of a roll.

The first polymer layer may be printed on one or both of its major surfaces by conventional printing methods such as screen-printing, flexo-printing or rotogravure prior to applying the second polymer layer. The printing may be of any type and comprise, e.g., graphics, instructions, locating or cutting marks or safety marks which break when trying to delaminate the second polymer layer from the first polymer layer.

The polymer suitable for the second polymer layer is a thermoplastic polymer which is selected so that it can be extruded or heat-bonded, i.e. bonded by the application of heat and, optionally, pressure, to the first polymer layer. The second polymer is preferably selected so that the resulting laminate has a T-peel strength exceeding the cohesive strength of the mechanically weaker of the first and second polymer layer, respectively. The second polymer can be screened by laminating the second polymer layer onto the first polymer layer and trying to separate the resulting laminate by hand; if the laminate passes this test and cannot be separated by hand the second polymer selected is compatible with the first polymer selected.
The second polymer may comprise thermoplastic polymer materials selected from a group comprising polyesters, polycarbonates, polyarylates, polyamides, polyimides, polyamideimides, polyether-amides, polyetherimides, polyaryl ethers, polyarylether ketones, aliphatic polyketones, polyphenylene sulfide, polysulfones, polystyrenes and their derivatives, polyacrylates, polymethacrylates, cellulose derivatives, polyethylenes, polyolefins, copolymers having a predominant olefin monomer, fluorinated polymers and copolymers, chlorinated polymers, polyacrylonitrile, polyvinylacetate, polyvinyl alcohol, polyethers, ionomeric resins, elastomers, silicone resins, epoxy resins, and polyurethanes. Miscible or immiscible polymer blends comprising any of the above-named polymers, and copolymers comprising any of the constituent monomers of any of the above-named polymers, are also suitable, provided a polymer layer produced from such a blend or copolymer, can be extruded or heat-bonded onto the first polymer layer. Especially preferred are polymers comprising at least 30 wt.-% and more preferably at least 40 wt- % of one or more polyolefins and, in particular, of polypropylene or polyethylene. When used in connection with the second polymer layer, the term "polyethylene" is meant to include copolymers comprising at least about 90% ethylene monomer units, by weight. "Polyethyylene" is also meant to include polymer mixtures comprising at least about 75% polyethylene, by weight. The term "polypropylene" has the same meaning as given above. for the first polymer layer.

The second polymer may comprise conventional additives such as fillers, pigments and other colorants, antiblocking agents, lubricants, plasticizers, processing aids, antistatic agents, nucleating agents, antioxidants and heat stabilizing agents, ultraviolet-light stabilizing agents, and other property modifiers. Fillers and other additives are preferably added in an effective amount selected so as not to adversely affect the bonding properties of the second polymer layer with respect to the first polymer layer. The amount of additives included in the second polymer is preferably less than 35 wt- % and more preferably less than 30 wt.-% with respect to the mass of the second polymer. The additives given above for use in the first polymer, can also be advantageously used for the second polymer.

The second polymer layer is applied to the first polymer layer by means of heat and optionally pressure. In a first method the first polymer layer and the second polymer layer are laminated onto each other by passing such layers through heated rolls applying sufficient heat and pressure to bond the first and second polymer layer to each other. In a second method which is preferred the second polymer is fed into the feed hopper of a single screw, twin screw, cascade, or other extruder system having an extruder barrel temperature adjusted to produce a stable homogeneous melt. The melt of the second polymer can then be extruded through a sheet die onto the first polymer layer followed, e.g., by air cooling. The resulting laminate can subsequently be wound into the form of a roll.

The second polymer layer may consist of two or multiple polymers layers which are, for example, co-extruded upon the first polymer layer or laminated upon each other prior to heat-bonding the second polymer layer upon the first polymer layer. The polymers useful in second polymer layers having a dual or multiple layer structure, are preferably selected from the group of polymers given above for the second polymer layer.

It was surprisingly found by the present inventors that the resulting laminate according to the present invention exhibits a high dimensional stability and, in particular, a low variation of shrinkage in CD. Although the present inventors do not wish to be bond by such theory, it is believed that this is due to the high dimensional stability of the first polymer layer which survives exposure to heat and optionally pressure when applying the second polymer layer. The laminate according to the present invention exhibits a variation of the laminate shrinkage in CD over a length of at least 100 m in machine direction as measured according the method of measurement described in the test section below, of not more than about 0.6%, more preferably of not more than about 0.4% and especially preferably of not more than about 0.2%. The absolute value of laminate shrinkage in CD over a length of at least 100 m in machine direction as measured according to the method of measurement described in the test section below, is not more than about ± 1.5% and more preferably less than about ± 1.0%.

The high dimensional stability of the laminate according to the present invention is particularly advantageous in applications where one or both major surface of the first polymer layer are printed. Extrusion-bonding of the second polymer layer onto the first polymer layer leaves the printing essentially unaffected, and the printing is virtually undistorted and undeformed in CD along the MD. If the laminate roll needs to be slit in two or more smaller rolls such slitting can easily be performed with minimal waste providing rolls bearing correctly positioned printings. In laminates of the state of the art exhibiting a distinctly higher variation of laminate shrinkage in CD, slit rolls with a correctly positioned printing can only be obtained if wider tolerances are allowed and a distinctly higher amount of waste is accepted.

The laminate according to the present invention may be modified and/or comprise further layers.

In a preferred embodiment the exposed surface of the second polymer layer exhibits male fastening elements of a mechanical closure system. A specific construction comprising mushroom-type male fastening elements 4 at the exposed surface of the second polymer layer 2 which can be prepared, for example, according to the method disclosed in WO 94/23,610, is shown in Fig. 2.

In another preferred embodiment according to the present invention, the exposed surface of the second polymer layer 2 bears a layer of female fastening elements 3 of a mechanical closure system. A specific construction comprising a layer of longitudinally oriented fibers having an arcuate-type structure between anchor portions through which such fiber sheet layer is bonded to the exposed surface of the second polymer layer, is shown in Fig. 3. Preparation of the construction of Fig.3 is described in WO 92/01401.

Laminates according to the present invention which are printed on at least one of the major surfaces of the first polymer layer and which exhibit mechanical fastening elements on the exposed surface of the second polymer layer or attached to such surface, are especially suitable as components of disposable soft goods articles such as diapers. Such laminates are especially preferably used in the waist portion of the diaper where they may be used to form the landing zone for the closure fastening tapes of the diaper comprising mechanical fastening elements interlocking with the mechanical fastening elements on the exposed surface of the laminate.

The laminate according to the invention can also comprise one or more adhesive layers which can be applied to the exposed surfaces of the second or first polymer layer, respectively. Especially preferred are laminates exhibiting an adhesive layer on the exposed surface of the first polymer layer and mechanical bonding elements on or attached to the exposed surface of the second polymer layer. Preferred adhesives are those activatable by pressure, heat or combinations thereof. Suitable adhesives include those based on acrylate, rubber resin, epoxies, urethanes or combinations thereof. The adhesive layer may be applied by solution, water-based or hot-melt coating methods. The adhesive can include hot melt-coated formulations, transfer-coated formulations, solvent-coated formulations, and latex formulations, as well as laminating, thermally-activated, and water-activated adhesives and bonding agents. Useful adhesives according to the present invention include all pressure sensitive adhesives. Pressure sensitive adhesives are well known to possess properties including: aggressive and permanent tack, adherence with no more than finger pressure, and sufficient ability to hold onto an adherend. Examples of adhesives useful in the invention include those based on general compositions of polyacrylate; polyvinyl ether; diene rubber such as natural rubber, polyisoprene, and polybutadiene; polyisobutylene; polychloroprene; butyl rubber; butadiene-acrylonitrile polymer; thermoplastic elastomer; block copolymers such as styrene-isoprene and styrene-isoprene-styrene (SIS) block copolymers, ethylene-propylene-diene polymers, and styrenebutadiene polymers; poly-alpha-olefin; amorphous polyolefin; silicone; ethylene-containing copolymer such as ethylene vinyl acetate, ethylacrylate, and ethyl methacrylate; polyurethane; polyamide; epoxy; polyvinylpyrrolidone and vinylpyrrolidone copolymers; polyesters; and mixtures or blends (continuous or discontinuous phases) of the above. Additionally, the adhesives can contain additives such as tacldfiers, plasticizers, fillers, antioxidants, stabilizers, pigments, diffusing materials, curatives, fibers, filaments, and solvents. Also, the adhesive optionally can be cured by any known method.

A general description of useful pressure sensitive adhesives may be found in Encyclopedia of Polymer Science and Engineering, Vol. 13, Wiley-Interscience Publishers (New York, 1988). Additional description of useful pressure sensitive adhesives may be found in Encyclopedia of Polymer Science and Technology, Vol. 1, Interscience Publishers (New York, 1964).

The invention will be further described with regard to the following examples. These examples are offered to further illustrate the various specific and preferred embodiments and techniques. It should be understood, however, that many variations and modifications may be made while remaining within the scope of the present invention.

Prior to this, some test methods are described which will be used in the examples.

### Test Methods

### Shrinkage of First Polymer Layer

A strip of the first polymer layer having a width of 2.54 cm and a length of ca. 30 cm was cut from the first polymer layer to be evaluated. Two marks were placed on the first polymer layer strip at a distance of 25.4 cm from one another. One end of the first polymer layer strip was then attached to a clamp and suspended in forced air oven at 120°C for 5 minutes. The first polymer layer strip was removed from the oven and allowed to cool to 23°C.

The distance between the marks was measured again and compared to the original distance. The difference was divided by the original distance and expressed in per cent. Each first polymer layer tested was evaluated three times and the results averaged. Measurements were made in the CD and MD.

### Laminate Shrinkage in the Crossweb Direction (%) and Variability

### a) General Method

A roll of the first polymer layer having a width in CD and a length in MD was printed with logos and registration marks on one major surface.

The distance between the edges of each pair of neighboring registration marks was measured and recorded on the outmost or an outer lap of the roll of the first polymer layer. This procedure was repeated at a distance of 80 mm further down web in MD, and the distances measured were averaged. In the above case, twelve distances were measured.

The second polymer layer was then extruded or heat-bonded onto the printed first polymer layer. After the extrusion bonding process was completed, the laminate was allowed to cool.

The distance between the edges of the registration marks was measured on the outmost or an outer lap of such rolls. This procedure was repeated at a distance of 80 mm further down web in MD, on an inner lap of the roll which was at least 100 m or more further down the web in MD (i.e. at least 100.08 m down web in MD as compared to the measurement on the outmost or outer lap) and at a distance of still further 80 mm further down web in MD (i.e. at least 100.16 m down web in MD as compared to the measurement on the outmost or outer lap), and the distances measured were averaged to give the average distance between the marks on the laminate in CD.

The average distance between the marks on the laminate in CD was subtracted from the average distance between the marks on the first polymer layer in CD prior to the application of the second polymer layer and divided by the average distance of the first polymer layer in CD prior to the application of the second polymer layer to give the laminate shrinkage in CD in percent.

The variation of laminate shrinkage in CD is defined as the difference of the maximum value of laminate shrinkage in per cent minus the minimum value of laminate shrinkage in per cent. For a high number of measurements the variation of lamination shrinkage corresponds to 6 times the standard deviation σ.

The laminate shrinkage in MD and the variation of the laminate shrinkage in MD are defined analogously.

### b) Specific Method Applied in the Examples Below

In the examples given below, the following specific measurements were applied. The roll of the first polymer had a width of 1.60 m and a length of ca. 10,000 m. In this case, seven registration marks each having a size of 38 mm in the CD and 9 mm in the MD were printed on the film. The center points of the registration marks were 240 mm from each other.

The distance between the edges of each pair of neighboring registration marks was measured and recorded on the outmost or an outer lap of the roll of the first polymer layer. This procedure was repeated at a distance of 80 mm further down web in MD, and the distances measured were averaged. In total, twelve distances were measured on the outmost or an outer lap of the first polymer layer. These measurements were repeated on an inner lap of the roll of the first laminate.

After the application of the second polymer layer, the resulting laminate was slit into 6 rolls each having a width of 240 mm. The cuts were made roughly through the center of each registration mark.

Each of the six slit laminate rolls was examined and the distance between the edges of the registration marks on each roll was measured on the outmost or an outer lap of such rolls. This was repeated at a distance of 80 mm down web on each of the six rolls. Thus twelve numbers were generated again and these were averaged.

These measurements were repeated approximately 2,000 m further down web in MD of each of the six rolls of laminate, and still further 80 mm down web in MD.

The values of the distances measured were used to calculate the shrinkage in CD and the variation of shrinkage in cross direction.

### Laminate Shrinkage in the Machine Direction (%)

### a) General Method

The laminate shrinkage in MD and the variation of the laminate shrinkage in MD are defined analogously to the corresponding magnitudes in CD.

### b) Specific Method Applied in the Examples Below

For shrinkage in the MD, the same procedure was used as for the CD, described above, with the exception that measurements were only taken at one position down the web at a distance of 1.6 m in MD from the beginning of the roll.

### Tensile Strength and Elongation at Break

Specimens of the first polymer layer and the laminate, respectively, having the dimensions of 25.4 mm in width and ca. 20 cm in length were evaluated using a tensile tester (Zwick). The jaws were placed at a distance of 100 mm apart. A cross-head speed 250 mm/min was employed.

### Bond Strength of Laminate

Attempts are made to separate the laminate by removing the loop beating extruded second polymer layer from the first polymer layer. A qualitative judgement of the level of bonding was made. A grade of PASS or FAIL, respectively, was given if the laminate could not or could, respectively, be separated by hand.

### Coefficient of Friction

Kinetic coefficient of friction was measured according to DIN 53375. A weight of 200 g was employed. Each measurement was made three times, each test employing a new sample of the first polymer layer or the laminate, respectively. The substrate or surface employed for the test was a loop-bearing surface, commercially available as Extrusion Bonded Loop # EBL-1510 from 3M Deutschland GmbH, Neuss, Germany.

### Stiffness

A strip of the first polymer layer or the laminate, respectively, film 25 mm wide and about 90 mm long was cut with the long side extending in the CD of the respective web. Two marks were place on the strip at 75 mm apart. The opposing ends of the strip were brought together and the strip formed into a loop so that the two marks were superimposed. The strip ends were clamped in the bottom jaw of a conventional tensile tester. The top jaw was then lowered at a speed of 210 mm/min. The loop was compressed by the upper jaw until the distance between the jaws was 12 mm. The force required to compress the loop to this point was recorded in cN. The measurement was repeated three times and the results averaged.

### Examples

### Example 1

A simultaneously biaxially-oriented polypropylene (S-BOPP) first polymer layer was prepared using a LISIM® Tap 1241 tenter stretching apparatus available from Brueckner Maschinenbau GmbH, Siegdorf, Germany). The polypropylene resin employed was Fina 3376 having a density of 0.905 and melt flow index of 2.5 (230°C and 2.16 kg).

The first polymer layer was stretched initially to a peak CD stretch ratio of 7.3 and to a peak MD stretch ratio of 6.0. Stretching was performed at a temperature of 149°C.

The first polymer layer was subsequently retracted to a final CD stretch ratio of 6.7 and a final MD stretch ratio of 5.4 in a controlled fashion maintained the first polymer layer at a temperature of 165°C. The final thickness of the film was 15 microns. Process parameters for preparation of the simultaneously biaxially-oriented polypropylene (S-BOPP) first polymer layer are summarized in Table 1.

The simultaneously biaxially-oriented polypropylene (S-BOPP) first polymer layer was subjected to the tests described above. The results of such tests are summarized in Table 2 below.

The first polymer layer was then corona-treated on one side to a surface tension of 48 dynes and then printed on the corona-treated surface within 4 weeks with a logo design and registration marks to aid in converting the final laminate.

An extrusion-bonded laminate comprising in the order given a layer of longitudinally oriented fibers (length of 50 mm, diameter of 10 dtex, polypropylene fibers as supplied by FiberVisions a/s, Varde, Denmark, Hy-Comfort Phil), the second polymer layer (polypropylene / polyethylene blend, thickness of 45 microns) and the simultaneously biaxially oriented polypropylene first polymer layer characterised above, was then prepared in the manner described in Example 3 of WO 92/01401 using the apparatus according to Fig.6 of WO `40I . The fibers were passed along corrugating rolls in order to provide a fiber layer having an arcuate-type structure between the anchor portions where such fiber layer is bonded to the second polymer layer which is extruded onto the first polymer layer. A schematic view of the resulting extrusion-bonded loop laminate is shown in Fig. 3. The first polymer layer was introduced into the extrusion-bonded laminate so that the printed surface was facing outwards. The image was visible from the opposite surface through the loop layers, as well.

The laminate shrinkage was examined using the test methods described above. The laminate was also evaluated qualitatively to assess the degree of bonding between the three layers. Properties of the extrusion bonded loop laminate are summarized in Table 3.

### Example 2

Example 1 was repeated with the exception that the process parameters for preparation of the simultaneously biaxially-oriented polypropylene first polymer layer were varied. The film was stretched at a temperature of 151°C to a peak CD stretch ratio of 7.2 and a peak MD stretch ratio of 6.0. The first polymer layer was then retracted to a final CD stretch ration of 6.5 and to a final MD stretch ratio of 5.4 while maintaining a temperature of 165°C. The final thickness of the film was 15 microns. The process parameters used are summarized in Table 1.

The properties of the simultaneously biaxially-oriented polypropylene first polymer layer are shown in Table 2. Test results on the laminate are shown in Table 3.

### Comparative Example 1

The extrusion bonding process described in Example 1 was repeated with the exception that the first polymer layer employed was a blown polyethylene film available as EPF 023 from Bischof and Klein GmbH & Co. (Konzell, Germany). Properties of the first polymer layer are summarized in Table 2 and those of the corresponding laminate are shown in Table 3.

### Comparative Example 2

The extrusion bonding process described in Example 1 was repeated with the exception that a sequentially biaxially oriented polypropylene film was employed using sequential stretching apparatus LEX from Brueckner Maschinenbau GmbH. The polypropylene resin used was Fina 3374. The final MD stretch ratio was 5.4, the final CD stretch ratio was 9.0. The final thickness of the film was 19 microns.

### Comparative Example 3

The extrusion bonding process of Example 1 was repeated with the exception that a polyester (polyethylene terephthalate or PET) film, available as HOSTAPHAN® RHS 12 from Mitsubishi Polyester Film GmbH, Wiesbaden, Germany, was employed as the first polymer layer.

### Comparative Example 4

The extrusion bonding process described in Example 1 was repeated with the exception that a cast polypropylene film, available as LXCPP-242.6-75 from Huntsman Company, Chippewa Falls, Wisconsin, USA, was employed as the first polymer layer. The film had a thickness of 30 microns.

**Table 1**

| Process Parameters for Preparation of S-BOPP First Polymer Layer | | |
|---|---|---|
| | Example 1 | Example 2 |
| Initial MD stretch ratio | 6.0 | 6.0 |
| Final MD stretch ratio | 5.4 | 5.4 |
| Relaxation MD, Final/Initial in % | 90 % | 90 % |
| Initial CD stretch ratio | 7.3 | 7.2 |
| Final CD stretch ratio | 6.7 | 6.5 |
| Relaxation CD; Final /Initial in % | 92 % | 90 % |
| Temperature during stretching [°C] | 149 | 151 |
| Temperature during tempering [°C] | 165 | 165 |

**Table 2**

| Properties of First Polymer Layer | | | | | | | | |
|---|---|---|---|---|---|---|---|---|
| Ex. | First polymer layer type | First polymer layer thickness microns | Average shrinkage CD, % | Average shrinkage MD, % | Coef. of friction, (MD, CD) | Tensile strength (MD), N/25 mm | Elong. at break (MD), % | Stiffness, cN |
| 1 | S-BOPP | 15 | -1.0 | 2.3 | 0.56, 0.91 | 59.5 | 133.7 | 0.3 |
| 2 | S-BOPP | 15 | 0.5 | 3.3 | -- | 65.8 | 140.2 | 0.3 |
| C1 | Blown PE | 25 | M | M | 0.41, 0.37 | 16.4 | 330 | 0.3 |
| C2 | BOPP | 19 | 1.3 | 2.1 | -- | 75.2 | 150 | 0.8 |
| C3 | Polyester | 12 | 1.0 | 0.8 | 0.48, 0.48 | 62.5 | 133 | 0.3 |
| C4 | Cast PP | 30 | 1.2 | 0.8 | 0.56, 0.57 | 14.6 | 450 | 0.3 |
| M = melts under test conditions | | | | | | | | |

**Table 3**

| Properties of Laminate | | | | | |
|---|---|---|---|---|---|
| Ex. | First polymer layer type | Average laminate shrinkage MD, % | Laminate shrinkage CD, % | | Bonding of first and second polymer layers |
| | | | Average | Variation | |
| 1 | S-BOPP | < 0.1 | 0.5 | 0.2 | Pass |
| 2 | S-BOPP | 0.3 | 0.7 | 0.4 | Pass |
| C1 | Blown PE | 1.3 | 2 | 2.4 | Pass |
| C 2 | BOPP | -- | 1 | 1.0 | Pass |
| C 3 | Polyester | -- | -- | -- | Fail |
| C 4 | Cast PP | - | 1 | 0. 5 | Pass |

## Claims

1. Laminate comprising a first polymer layer and a second polymer layer wherein the first polymer layer comprises at least one polyolefin and is simultaneously biaxially stretched to a peak first direction stretch parameter and, independently of the peak first direction stretch parameter, to a peak second direction stretch parameter, partially relaxed to the final first direction stretch parameter and independently of the final first direction stretch parameter, to the final second direction stretch parameter, and the second polymer layer is extruded upon or heat-bonded to the first polymer layer, said laminate exhibiting a variation of the laminate shrinkage in cross direction over a length of at least 100 m in machine direction of less than about 0.6%.

2. Laminate according to claim 1 wherein the laminate shrinkage in cross direction over a length of at least 100 m in machine direction is less than between about -1.0% and + 1.0%.

3. Laminate according to claim 1 wherein the polymer or the first polymer layer comprises at least 50 wt.-% of one or more polyolefins.

4. Laminate according to claim 1 wherein the polymer of the first polymer layer comprises polypropylene and/or at least one copolymer comprising at least about 80% propylene monomer units.

5. Laminate according to claim 1 wherein the polymer of the second polymer layer comprises at least one polyolefin.

6. Laminate according to claim 1 wherein the second polymer layer is extruded upon said first polymer layer in a thickness of between 10 and 200 µm.

7. Laminate according to claim 1 wherein the second polymer layer is extruded upon the first polymer layer at a temperature of between 150 to 350°C.

8. Laminate according to claim 1 wherein the first direction and the second direction arc orthogonal.

9. Laminate according to claim 8 wherein the first direction and the second direction arc the cross direction, CD, and the machine direction, MD, respectively.

10. Laminate according to claim 1 wherein the final first direction stretch parameter is between 4: 1 and 15: 1, and wherein the final second direction stretch parameter is independently from the final first direction stretch parameter between 4:1 and 15:1.

11. Laminate according to claim 1 wherein the first polymer layer is stretched to a peak first direction stretch parameter that is at least 1.1 times the final first direction stretch parameter and/or independently of the peak first final stretch parameter to a peak second direction stretch parameter of at least 1.1 times the final second direction stretch parameter.

12. Laminate according to claim 1 wherein the exposed surface of the second polymer layer is microstructured.

13. Laminate according to claim 12 wherein the microstructured surface comprises male elements of a mechanical closure system.

14. Laminate according to claim 1 additionally comprising a third layer comprising elements of a mechanical closure system attached to the exposed surface of the seconded polymer layer.

15. Laminate according to claim 14 wherein the elements comprise loops of a hook and loop system.

16. *.* Laminate according to claim 1 wherein one major surface of the first Polymer layer is printed.

17. Laminate according to claim 1 wherein the exposed surface of the first or second polymer layer, respectively, bears a pressure-sensitive adhesive layer.

18. Laminate according to claim 1 rolled up in the form of a stable roll.

19. Method of preparing a roll of a laminate comprising
(a) providing a first polymer layer comprising a polyolefin,
(b) imparting a sufficiently high temperature to the film to allow a significant amount of biaxial stretch,
(c) biaxial lenter stretching said first polymer layer simultancously to a peak - first direction stretch parameter and, independently of the peak first direction stretch parameter to a peak second direction stretch parameter,
(d) partially relaxing the first polymer layer by retracting it to the final first direction stretch parameter and/or, independently of the final first direction stretch parameter, to the final second direction stretch parameter,
(e) tempering the first polymer layer in such partially relaxed state at a temperature of between 80 and 200°C, and
(f) extruding the second polymer layer onto said first polymer layer at a temperature of between 150 and 350°C.

20. Personal incontinence product comprising a laminate according to any one of claims 12 to 15.

## Patentansprüche

1. Laminat aufweisend eine erste Polymerschicht und eine zweite Polymerschicht, wobei die erste Polymerschicht mindestens ein Polyolefin aufweist und gleichzeitig biaxial bis zu einem maximalen Reckparameter in erster Richtung und unabhängig von dem maximalen Reckparameter in erster Richtung bis zu einem maximalen Reckparameter in zweiter Richtung gereckt, teilweise bis zum endgültigen Reckparameter in erster Richtung und unabhängig vom endgültigen Reckparameter in erster Richtung bis zum endgültigen Reckparameter in zweiter Richtung entspannt wird, und die zweite Polymerschicht auf die erste Polymerschicht extrudiert oder mit ihr durch Wärme verbunden wird, wobei das Laminat eine Variation der Laminatschrumpfung in Querrichtung über eine Länge von mindestens 100 m in der Maschinenrichtung von weniger als etwa 0,6 % aufweist.

2. Laminat nach Anspruch 1, wobei die Laminatschrumpfung in Querrichtung über eine Länge von mindestens 100 m in Maschinenrichtung weniger als zwischen etwa - 1,0 % und + 1,0 % beträgt.

3. Laminat nach Anspruch 1, wobei das Polymer der ersten Polymerschicht mindestens 50 Gew.-% eines oder mehrerer Polyolefine aufweist.

4. Laminat nach Anspruch 1, wobei das Polymer der ersten Polymerschicht Polypropylen und/oder mindestens ein Copolymer aufweist, das mindestens etwa 80 % Propylenmonomereinheiten aufweist.

5. Laminat nach Anspruch 1, wobei das Polymer der zweiten Polymerschicht mindestens ein Polyolefin aufweist.

6. Laminat nach Anspruch 1, wobei die zweite Polymerschicht auf der ersten Polymerschicht in einer Dicke zwischen 10 und 200 µm extrudiert wird.

7. Laminat nach Anspruch 1, wobei die zweite Polymerschicht auf der ersten Polymerschicht bei einer Temperatur von 150 bis 350 ºC extrudiert wird.

8. Laminat nach Anspruch 1, wobei die erste Richtung und die zweite Richtung orthogonal sind.

9. Laminat nach Anspruch 8, wobei es sich bei der ersten Richtung und der zweiten Richtung um die Querrichtung QR bzw. die Maschinenrichtung MR handelt.

10. Laminat nach Anspruch 1, wobei der endgültige Reckparameter in erster Richtung zwischen 4:1 und 15:1 liegt und wobei der endgültige Reckparameter in zweiter Richtung unabhängig von dem endgültigen Reckparameter in erster Richtung zwischen 4:1 und 15:1 liegt.

11. Laminat nach Anspruch 1, wobei die erste Polymerschicht bis zu einem maximalen Reckparameter in erster Richtung, der mindestens das 1,1 fache des endgültigen Reckparameters in erster Richtung beträgt und/oder unabhängig von dem maximalen Reckparameter in erster Richtung bis zu einem maximalen Reckparameter in zweiter Richtung von mindestens dem 1.1 fachen des endgültigen Reckparameters in zweiter Richtung gereckt wird.

12. Laminat nach Anspruch 1, wobei die exponierte Oberfläche der zweiten Polymerschicht mikrostrukturiert ist.

13. Laminat nach Anspruch 12, wobei die mikrostrukturierte Oberfläche männliche Elemente eines mechanischen Verschluss-Systems aufweist.

14. Laminat nach Anspruch 1, das zusätzlich eine dritte Schicht aufweist, die Elemente eines mechanischen Verschluss-Systems aufweist, das an der exponierten Oberfläche der zweiten Polymerschicht befestigt ist.

15. Laminat nach Anspruch 14, wobei die Elemente Schlaufen eines Haken- und Schlaufensystems aufweisen.

16. Laminat nach Anspruch 1, wobei eine Hauptoberfläche der ersten Polymerschicht bedruckt wird.

17. Laminat nach Anspruch 1, wobei die exponierte Oberfläche der ersten bzw. zweiten Polymerschicht eine druckempfindliche Klebstoffschicht trägt.

18. Laminat nach Anspruch 1, das in Form einer stabilen Rolle aufgerollt ist.

19. Verfahren für das zubereiten einer Rolle eines Laminats, aufweisend
(a) Bereitstellen einer ersten Polymerschicht, die ein Polyolefin aufweist,
(b) Aufbringen einer ausreichend hohen Temperatur auf die Schicht, um eine signifikante Menge biaxialer Reckung zu ge-statten,
(c) biaxiales Spannrahmenrecken der ersten Polymerschicht gleichzeitig bis zu einem maximalen Reckparameter in erster Richtung und unabhängig von dem maximalen Reckparameter in erster Richtung bis zu einem maximalen Reckparameter in zweiter Richtung,
(d) teilweises Entspannen der ersten Polymerschicht durch Zurückziehen derselben bis zu dem endgültigen Reckparameter in erster Richtung und/oder unabhängig von dem endgültigen Reckparameter in erster Richtung bis zu dem endgültigen Reckparameter in zweiter Richtung,
(e) Tempern der ersten Polymerschicht in einem solchen teilweise entspannten Zustand bei einer Temperatur zwischen 80 und 200 ºC und
(f) Extrudieren der zweiten Polymerschicht auf die erste Polymerschicht bei einer Temperatur zwischen 150 und 350 ºC.

20. Persönliches Inkontinenzprodukt aufweisend ein Laminat nach einem der Ansprüche 12 bis 15.

## Revendications

1. Stratifié comprenant une première couche de polymère et une deuxième couche de polymère, dans lequel la première couche de polymère comprend au moins une polyoléfine et est simultanément étirée biaxialement jusqu'à un paramètre d'étirage maximum dans le premier sens et, indépendamment du paramètre d'étirage maximum dans le premier sens, jusqu'à un paramètre d'étirage maximum dans le deuxième sens, partiellement relâchée jusqu'au paramètre d'étirage final dans le premier sens et, indépendamment du paramètre d'étirage final dans le premier sens, jusqu'au paramètre d'étirage final dans le deuxième sens, et la deuxième couche de polymère est extrudée sur, ou thermocollée sur, la première couche de polymère, ledit stratifié présentant une variation du retrait du stratifié dans le sens travers, sur une longueur d'au moins 100 m dans le sens machine, inférieure à environ 0,6 %.

2. Stratifié selon la revendication 1, dans lequel le retrait du stratifié dans le sens travers, sur une longueur d'au moins 100 m dans le sens machine, est de moins d'entre environ -1,0 % et +1,0 %.

3. Stratifié selon la revendication 1, dans lequel le polymère de la première couche de polymère comprend un pourcentage pondéral d'au moins 50 % d'une ou plusieurs polyoléfines.

4. Stratifié selon la revendication 1, dans lequel le polymère de la première couche de polymère comprend du polypropylène et/ou au moins un copolymère comprenant au moins environ 80 % d'unités monomères de propylène.

5. Stratifié selon la revendication 1, dans lequel le polymère de la deuxième couche de polymère comprend au moins une polyoléfine.

6. Stratifié selon la revendication 1, dans lequel la deuxième couche de polymère est extrudée sur ladite première couche de polymère sur une épaisseur entre 10 et 200 µm.

7. Stratifié selon la revendication 1, dans lequel la deuxième couche de polymère est extrudée sur la première couche de polymère à une température entre 150 et 350 °C.

8. Stratifié selon la revendication 1, dans lequel le premier sens et le deuxième sens sont orthogonaux.

9. Stratifié selon la revendication 8, dans lequel le premier sens et le deuxième sens sont le sens travers, ST, et le sens machine, SM, respectivement.

10. Stratifié selon la revendication 1, dans lequel le paramètre d'étirage final dans le premier sens est entre 4:1 et 15:1, et dans lequel le paramètre d'étirage final dans le deuxième sens est, indépendamment du paramètre d'étirage final dans le premier sens, entre 4:1 et 15:1.

11. Stratifié selon la revendication 1, dans lequel la première couche de polymère est étirée jusqu'à un paramètre d'étirage maximum dans le premier sens qui est d'au moins 1,1 fois le paramètre d'étirage final dans le premier sens et/ou, indépendamment du paramètre d'étirage maximum dans le premier sens, jusqu'à un paramètre d'étirage maximum dans le deuxième sens qui est d'au moins 1,1 fois le paramètre d'étirage final dans le deuxième sens.

12. Stratifié selon la revendication 1, dans lequel la surface exposée de la deuxième couche de polymère est microstructurée.

13. Stratifié selon la revendication 12, dans lequel la surface microstructurée comprend des éléments mâles d'un système de fermeture mécanique.

14. Stratifié selon la revendication 1, comprenant en outre une troisième couche comprenant des éléments d'un système de fermeture mécanique fixé à la surface exposée de la deuxième couche de polymère.

15. Stratifié selon la revendication 14, dans lequel les éléments comprennent des boucles d'un système à crochets et à boucles.

16. Stratifié selon la revendication 1, dans lequel une surface principale de la première couche de polymère est imprimée.

17. Stratifié selon la revendication 1, dans lequel la surface exposée de la première ou de la deuxième couche de polymère, respectivement, porte une couche adhésive sensible à la pression.

18. Stratifié selon la revendication 1, enroulé sous la forme d'un rouleau stable.

19. Méthode de préparation d'un rouleau d'un stratifié, consistant à :
(a) fournir une première couche de polymère comprenant une polyoléfine,
(b) porter le film à une température suffisamment élevée pour permettre un degré significatif d'étirage biaxial,
(c) étirer biaxialement sur banc ladite première couche de polymère simultanément jusqu'à un paramètre d'étirage maximum dans le premier sens et, indépendamment du paramètre d'étirage maximum dans le premier sens, jusqu'à un paramètre d'étirage maximum dans le deuxième sens,
(d) relâcher partiellement la première couche de polymère en la rétractant jusqu'au paramètre d'étirage final dans le premier sens et/ou, indépendamment du paramètre d'étirage final dans le premier sens, jusqu'au paramètre d'étirage final dans le deuxième sens,
(e) tempérer la première couche de polymère dans cet état partiellement relâché à une température entre 80 et 200 °C, et
(f) extruder la deuxième couche de polymère sur ladite première couche de polymère à une température entre 150 et 350 °C.

20. Produit pour personne incontinente, comprenant un stratifié selon l'une quelconque des revendications 12 à 15.
